# EUROPÄISCHE PATENTANMELDUNG

(11) **EP 1 495 799 A2**
(43) Veröffentlichungstag der Anmeldung: **12.01.2005**
(21) Anmeldenummer: 04013554.3
(22) Anmeldetag: 09.06.2004
(51) Int. Cl.: B01J 19/00, B01L 3/00

(54) **Vorrichtung zum Handhaben von begrenzten Flüssigkeitsmengen**

(30) Priorität: 13.06.2003 DE 10326607
(71) Anmelder: STEAG microParts GmbH, 44227 Dortmund (DE)
(72) Erfinder: Blankenstein, Gert, Dr., 44139 Dortmund (DE); Peters, Ralf-Peter, Dr. Dipl-Phys., 51467 Bergisch-Gladbach (DE); Bartos, Holger, Dr. Dipl.-Biol., 44287 Dortmund (DE)
(74) Vertreter: Graefe, Jörg

(57) **Zusammenfassung**

Vorrichtung zum Handhaben von begrenzten Flüssigkeitsmengen mit folgenden Merkmalen:
- die Vorrichtung umfasst zumindest einen Festkörper (1);
- der Festkörper (1) weist Oberflächenbereiche (6, 7) auf, in welchen unterschiedliche Kapillarkräfte wirken;
- eine oder mehrere erste Oberflächenbereiche (6a bis 6e) haben eine mikrostrukturierte und/oder nanostrukturierte Oberfläche;
- die mikrostrukturierten und/oder nanostrukturierten Oberflächen weisen regelmäßig angeordnete Strukturelemente (A bis E) auf;
- der Festkörper und die Strukturelemente bestehen aus einem Material und sind einstückig miteinander verbunden;
- einer oder mehrere erste Oberflächenbereiche (6a bis 6e) sind mit Reagenzien versehen;
- ein zweiter Oberflächenbereich (7) umschließt zumindest einen der ersten Oberflächenbereiche.

## Beschreibung

Die vorliegende Erfindung betrifft eine Vorrichtung zum Handhaben von Flüssigkeiten und ein Verfahren zur Herstellung und Verwendung einer derartigen Vorrichtung.

Aus der Druckschrift WO 02/085520 A2 ist ein Körper bekannt, der eine Oberfläche hat, die erste und zweite Oberflächenbereiche aufweist, welche eine unterschiedliche Benetzbarkeit mit einer Flüssigkeit haben. Die Oberflächenbereiche können dabei beispielsweise einerseits hydrophil und andererseits hydrophob sein. Ebenso ist es möglich, dass die Oberflächenbereiche bezüglich öliger Lösungen lipophil bzw. lipophob sind. In dieser Druckschrift werden zwei Verfahren zur Herstellung der unterschiedlichen Oberflächenbereiche genannt. So lassen sich einerseits die unterschiedlichen Benetzungseigenschaften durch Beschichtungen erreichen. Diese Beschichtungen können z.B. durch lithographische Verfahren mit nachfolgenden Beschichtungsschritten erreichte werden. Zum anderen können die unterschiedlichen Benetzungseigenschaften durch Mikrostrukturierung erreicht werden, wie es beim so genannten Lotus-Effekt der Fall ist, der auf unterschiedlichen Rauhigkeiten der Oberfläche beruht. Diese unterschiedlichen Rauhigkeiten können durch Mikrostrukturierung der entsprechenden Oberflächenbereiche erhalten werden. Dabei wirken innerhalb der mikrostrukturierten Bereiche Kapillarkräfte, die die Flüssigkeiten in diesen Oberflächenbereichen halten. Die Druckschrift nennt als Beispiel für die Herstellung einer Mikrostruktur eine chemische Behandlung oder Ionenbestrahlung.

Wird eine Mikrostrukturierung durch chemische Behandlung, hier kommt insbesondere Ätzen in Frage oder durch Ionenbestrahlung, hergestellt, entsteht bei den heute bekannten gattungsgemäßen Festkörpern eine unregelmäßig strukturierte Oberfläche. Die Oberfläche lässt sich durch Berechnungen nicht exakt erfassen.

Daher ist es schwierig die wirkenden Kapillarkräfte genau anzugeben. Sollen jedoch Oberflächenbereiche mit verschiedenen Kapillarkräften hergestellt werden, ist es vorteilhaft die wirkenden Kapillarkräfte eines jeden Oberflächenbereiches genau zu kennen bzw. Oberflächenbereiche mit gewünschten Kapillarkräften herzustellen.

Ein weiteres Problem mit den durch die bekannten Verfahren hergestellten Mikrostrukturen ist, dass die wirkenden Kapillarkräfte, welche die Flüssigkeit in einem der Oberflächenbereiche halten und damit auch die Mengen der Flüssigkeit vorgeben, die in dem Oberflächenbereich gespeichert werden können, relativ gering sind. Es kann somit nur eine relativ kleine Flüssigkeitsmenge in dem mikrostrukturierten Oberflächenbereich deponiert werden.

Aus der Druckschrift mit der Veröffentlichungsnummer US 6,451,264 B1 ist eine Vorrichtung bekannt, mit der Flüssigkeiten durch gekrümmte kapillare Kanäle zu verschiedenen Kammern geleitet werden, in denen die Flüssigkeit auf bestimmte Reaktionen getestet werden kann. In der Vorrichtung sind dazu geeignete Trockenreagenzien angeordnet. Die Trockenreagenzien dürften dabei bevorzugt in den Kammern angeordnet sein, in denen die Flüssigkeit getestet wird.

Bei gekrümmten kapillaren Kanälen tritt das Phänomen auf, dass die Flüssigkeit an der Wand mit dem geringeren Radius schneller befördert wird als der gegenüberliegenden Kanalwand mit dem größeren Radius. Eine gleichförmige Bewegung der Flüssigkeit durch die gekrümmten Kanäle ist daher üblicherweise nicht möglich. Um diesem Problem abzuhelfen, wird in der genannten Druckschrift vorgeschlagen, in dem gekrümmten Kanal mikrostrukturierte Oberflächen mit regelmäßig angeordneten Strukturelementen anzuordnen, die eine gleichförmige Bewegung der Flüssigkeit in den gekrümmten Kanälen gewährleisten. Erreicht eine Flüssigkeit einen solchen mikrostrukturierten Oberflächenbereich in dem gekrümmten Kanal, wird zunächst dieser mikrostrukturierte Oberflächenbereich mit der Flüssigkeit befüllt. Erst wenn der mikrostrukturierte Oberflächenbereich vollständig mit der Flüssigkeit befüllt ist, bewirken die Transportkräfte, dass die Flüssigkeit in Transportrichtung wieder aus dem mikrostrukturierten Oberflächenbereich austritt. Ein gegenüber dem Transport der Flüssigkeit entlang der Kanalwand mit dem größeren Radius schnellere Transport entlang der Kanalwand mit dem kleineren Radius ist damit verhindert. Die Flüssigkeit wird gleichförmig durch den gekrümmten Kanal transportiert.

Die mikrostrukturierten Oberflächenbereiche in den gekrümmten Kanälen der Vorrichtung gemäß der genannten Druckschrift sind somit nicht zum Speichern oder Deponieren einer Flüssigkeit geeignet oder vorgesehen. Zweck der mikrostrukturierten Oberflächenbereiche ist, die gleichförmige Bewegung der Flüssigkeit in dem gekrümmten Kanal zu gewährleisten. Die Vorrichtung, wie sie aus der Druckschrift mit der Veröffentlichungsnummer US 6,451,264 B1 bekannt ist, eignet sich somit nicht für das Handhaben von Flüssigkeiten im Sinne der vorliegenden Erfindung, insbesondere nicht zum Speichern oder Deponieren definierter Flüssigkeitsmengen.

Auch aus der Druckschrift mit der Veröffentlichungsnummer US 6,368,871 B1 ist eine Vorrichtung bekannt, die einen Oberflächenbereich hat, in dem Mikrostrukturelemente angeordnet sind. Diese Oberfläche erstreckt sich in einer aufgeweiteten Stelle eines Kanals von der einen Kanalwand zur gegenüberliegenden Kanalwand. Die Strukturen dienen dazu aus einer die Kammer durchfließenden Flüssigkeit bestimmte Stoffe herauszufiltern, um diese zu extrahieren oder zu konzentrieren (Spalte 7, Zeile 40 bis Zeile 57). Die Mikrostrukturelemente des Oberflächenbereichs in dem Kanal sind weder dazu geeignet noch dazu gedacht, definierte Flüssigkeitsmengen zu speichern oder zu deponieren. Auch ist nicht bekannt, definierte Mengen von Reagenzien in den Oberflächenbereichen einzulagern.

Die Probleme des Standes der Technik werden erfindungsgemäß durch eine Vorrichtung gemäß Anspruch 1 gelöst. Bevorzugte Ausführungen einer erfindungsgemäßen Vorrichtung ergeben sich aus den davon abhängigen Unteransprüchen. Eine erfindungsgemäße Vorrichtung kann nach einem Verfahren gemäß Anspruch 39 bis 46 hergestellt bzw. gemäß Anspruch 47 bis 50 verwendet werden.

Eine erfindungsgemäße Vorrichtung zum Handhaben von Flüssigkeiten weist einen Festkörper auf. Dieser Festkörper weist, wie bereits bekannt, Oberflächenbereiche auf, in welchen unterschiedliche Kapillarkräfte wirken. Ein oder mehrere erste Oberflächenbereiche haben dabei eine mikrostrukturierte und/oder nanostrukturierte Oberfläche, die regelmäßig angeordnete Strukturelemente aufweisen. Die Strukturelemente sind dabei einstückig mit dem übrigen Festkörper verbunden und bestehen aus dem gleichen Material wie der übrige Festkörper.

Durch die regelmäßig angeordneten Strukturelemente werden in dem ersten Oberflächenbereich beziehungsweise in den ersten Oberflächenbereichen Kapillarkräfte erzeugt, die dafür Sorge tragen, dass eine Flüssigkeit sich bevorzugt in dem ersten Oberflächenbereich aufhält. Die Wirkung der Kapillarkräfte ist so groß, dass eine Flüssigkeit, die den Rand des ersten Oberflächenbereichs berührt, durch die Kapillarkraft in den ersten Oberflächenbereich hineingesaugt werden. Durch die Auswahl und die Gestaltung der Strukturelemente in dem ersten Oberflächenbereich kann dabei die durch die Strukturelemente hervorgerufene Kapillarkraft eingestellt werden. Das Einstellen kann dabei durch Ausprobieren verschiedener Geometrien oder aber durch gezieltes Berechnen der Kapillarkraft der Geometrien erfolgen. Durch eine definierte Kapillarkraft der ersten Oberflächenbereiche ist es möglich eine definierte Flüssigkeitsmenge in den ersten Oberflächenbereichen zu speichern bzw. zu deponieren. So können beispielsweise definierte Mengen einer oder verschiedener Reagenzflüssigkeiten in den Oberflächenbereichen deponiert und immobilisiert, z. B. eingetrocknet werden. Damit ist gewährleistet, dass eine definierte Menge des Reagenz in den ersten Oberflächenbereich angeordnet ist. Später kann dann eine zweite Flüssigkeitsmenge, z. B. eine Probenflüssigkeit auf den ersten Oberflächenbereich gegeben werden, wobei auch diese zweite Flüssigkeitsmenge durch die bekannte Kapillarkraft des ersten Oberflächenbereichs begrenzt d. h. definiert ist.

Gemäß der Erfindung ist einer oder mehrere erste Oberflächenbereiche mit einer oder verschiedenen Reagenzien versehen sein. Die Reagenzien können zwischen den Strukturelementen eingelagert sein. Ferner ist es möglich, dass die Reagenzien in Partikeln gekapselt sind, wobei diese Partikel Kunststoffpartikel oder magnetische Partikel sind. Ebenso ist es möglich, dass die zweiten Oberflächenbereiche mit Reagenzien versehen sind.

Das Reagenz beziehungsweise die Reagenzien können resuspendierbar in dem beziehungsweise den ersten Oberflächenbereichen eingelagert sein. Dazu können die Reagenzien in flüssiger Form mittels einer Pipette oder ähnlichem auf die ersten Oberflächenbereiche der Vorrichtung gebracht werden. Anschließend werden die Reagenzien eingetrocknet. Die Reagenzien werden dabei nicht kovalent an die Oberfläche gekoppelt, sondern lassen sich über geeignete Flüssigkeiten Resuspendieren.

Die Reagenzien können dann beispielsweise durch eine Probe (flüssiges Untersuchungsmaterial) resuspendiert werden. Die Probe kann dazu unmittelbar auf die ersten Oberflächenbereiche gebracht werden oder aber über ein Kanalsystem, insbesondere über ein Kanalsystem aus kapillaren Kanälen zu den ersten Oberflächenbereichen von einem Einlass geleitet werden. Durch den Kontakt mit der Probe werden die Reagenzien aufgelöst und mobilisiert. So können sie mit der Probe reagieren. Die in dem ersten Oberflächenbereich eingetrockneten Reagenzien, die wegen des Eintrocknens auch als Trockenchemikalien oder Trockenreagenzien bezeichnet werden, können zum Nachweis einer bestimmten Komponente der Probe geeignet sein. Die Trockenchemikalien können dabei der Sichtbarmachung der Komponente der Probe dienen. Dieses kann durch einfaches Anfärben oder aber durch übliche enzymatische chemiluminometrische Indikatorreaktionen geschehen. Die Reaktion kann dann zum Beispiel durch lichttechnische Untersuchungen oder aber mit dem bloßen Auge analysiert werden. Neben den genannten optischen Verfahren können auch elektrochemische Analyseverfahren eingesetzt werden, zum Beispiel durch Elektroden in der Vorrichtung.

Die Reagenzien können auch permanent in den ersten Oberflächenbereichen einer erfindungsgemäßen Vorrichtung eingelagert sein. Die Reagenzien können dann als biochemische Sonden dienen, wobei in einer auf die ersten Oberflächenbereichen gegebenen Probenflüssigkeit vorhandene Stoffe gezielt an solchen biochemischen Sonden gebunden werden, was einen Nachweis der Stoffe ermöglicht. Die permanent in den ersten Oberflächenbereichen eingelagerten Reagenzien werden nicht durch die Probenflüssigkeit resuspendiert. Die Reagenzien sind vielmehr fest in der Oberfläche der ersten Oberflächenbereiche eingefügt. Die in der Probenflüssigkeit vorhandenen Stoffe reagieren mit diesen eingelagerten Reagenzien. Ein Auswaschen des Reaktionsproduktes ist nicht möglich. Vielmehr muss das Reaktionsprodukt an Ort und Stelle der ersten Oberflächenbereiche zum Beispiel durch optische Verfahren untersucht werden.

Eine erfindungsgemäße Vorrichtung kann beispielsweise durch das folgende Verfahren hergestellt werden. Zunächst werden in der Oberfläche des Festkörpers Oberflächenbereiche durch Bearbeitung (z.B. spanende Bearbeitung, Laserbearbeitung oder Ionenstrahlbearbeitung) des Festkörpers hergestellt, wobei in den Oberflächenbereichen zumindest teilweise unterschiedliche Kapillarkräfte wirken. Bei der Bearbeitung werden in ersten Oberflächenbereichen mikro- und/oder nanostrukturierte Oberflächen hergestellt, die durch regelmäßig angeordnete Strukturelemente gebildet werden. Ebenso ist es möglich die Mikrostrukturen der ersten Oberflächenbereiche bei der Herstellung des Festkörpers, z.B. durch Spritzgießen (Mikrospritzguss), in die Oberfläche des Festkörpers einzuformen. Ein Festkörper besteht dann vorteilhaft aus einem Kunststoff. Es ist aber möglich, den Festkörper einer erfindungsgemäßen Vorrichtung aus Glas oder Silizium herzustellen.

Bei einer erfindungsgemäßen Vorrichtung können zweite Oberflächenbereiche vorgesehen sein, die vorzugsweise eben, das heißt ohne Mikro- oder Nanostrukturierung ausgebildet sind. In den zweiten Oberflächenbereichen wirken vorzugsweise im Vergleich zu den ersten Oberflächenbereichen allenfalls geringe Kapillarkräfte, so dass eine Flüssigkeit bevorzugt in den ersten Oberflächenbereichen eingelagert beziehungsweise bevorzugt von den ersten Oberflächenbereichen aufgenommen wird.

In den ersten Oberflächenbereichen einer erfindungsgemäßen Vorrichtung können unterschiedlich große Kapillarkräfte wirken.

Die Strukturelemente einer erfindungsgemäßen Vorrichtung, welche zur Mikro- und/oder Nanostrukturierung der ersten Oberflächenbereiche vorgesehen sind, können Säulen und/oder Stelen umfassen. Diese Säulen können einen Durchmesser von 0,1 bis 500 µm haben. Der Abstand von Säule beziehungsweise Stele zu Säule beziehungsweise Stele kann von 0,1 bis 500 µm sein.

Die Säulen beziehungsweise Stelen können einen kreisförmigen oder mehreckigen Querschnitt haben. Der Durchmesser der Säulen beziehungsweise Stelen beträgt vorteilhaft 0,1 bis 500 µm.

Die Strukturelemente können ferner Nuten umfassen, welche vorzugsweise eine Breite von 0,1 bis 500 µm und eine Tiefe von 0,1 bis 500 µm haben. Die Nuten sind vorzugsweise parallel angeordnet, haben einen Abstand von 0,1 bis 500 µm voneinander und sind vorzugsweise 0,1 bis 500 µm tief. Die Nuten können gerade oder kreisförmig ausgeführt sein. Ebenso ist es möglich, dass die Nuten einen kerbenartigen Querschnitt haben. Die Nuten können gemäß der Erfindung miteinander verbunden sein und eine Kanalstruktur, z.B. eine netzartige oder mäanderförmige Kanalstruktur bilden.

Außerdem ist es möglich, dass bei einer erfindungsgemäßen Vorrichtung als Strukturelemente Stege vorgesehen sind. Diese Stege können eine Breite von 0,1 bis 500 µm haben und eine Höhe von 0,1 bis 500 µm aufweisen. Vorteilhaft haben die Stege einen Abstand von 0,1 bis 500 µm und sind parallel zueinander angeordnet.

Als Strukturelemente können bei einem abgesenkten ersten Oberflächenbereich auch Kerben dienen, die in den Rand des abgesenkten Oberflächenbereichs eingebracht sind. Derartige Kerben sind zum Beispiel als Mittel zur Überwindung eines Kapillarstopps aus der Druckschrift US 6,296,126 B1, Fig. 6, Bezugszeichen 17 bekannt.

Bei einer erfindungsgemäßen Vorrichtung können einer oder mehrere erste Oberflächenbereiche gegenüber der umgebenden Oberfläche abgesenkt oder erhaben sein. Eine derartige sprunghafte Änderung der Oberflächeneigenschaften und die dadurch erzeugte große Kapillarkraft führt ähnlich wie bei einem Kapillarstopp zu einem Kapillarsprung, welcher die erhabenen bzw. abgesenkten Oberflächenbereiche deutlich begrenzt.

Die ersten Oberflächenbereiche können in Form einer Matrix angeordnet sein, wobei die ersten Oberflächenbereiche teilweise oder vorzugsweise vollständig von dem zweiten Oberflächenbereich umschlossen sind. Die ersten Oberflächenbereiche können dabei insbesondere auch in einer Kammer der Vorrichtung angeordnet sein, die einen Einlass und einen Auslass hat, so dass die Kammer von einer Probenflüssigkeit durchströmt werden kann. Die ersten Oberflächenbereiche können dann sowohl nebeneinander als auch hintereinander in einer oder mehreren Reihen in der Kammer angeordnet sein, wobei jeder erste Oberflächenbereich dem zweiten Oberflächenbereich umschlossen wird.

Die ersten Oberflächenbereiche einer erfindungsgemäßen Vorrichtung können vor dem Auftragen der Reagenzien durch Plasmaverfahren wie beispielsweise Plasmapolymerisierung oder nasschemische Verfahren funktionalisiert werden. Dadurch kann die Menge des Reagenz, das in dem ersten Oberflächenbereich eingelagert werden soll, erhöht werden.

Bei einer bevorzugten Ausführung einer erfindungsgemäßen Vorrichtung, ist ein Abschnitt von zusammenhängenden ersten und/oder zweiten Oberflächenbereichen gegenüber der umgebenden Oberfläche abgesenkt. Dieser zusammenhängende Abschnitt kann dann mit einem Deckel verschlossen sein, wobei der Deckel durch einen zweiten Festkörper gebildet sein kann, der wie ein erster Festkörper ausgebildet sein kann, und wobei der zwischen dem Abschnitt und dem Deckel befindliche Raum eine Reaktionskammer bildet. Ist der zweite Festkörper ähnlich wie der erste Festkörper ausgebildet, weist er vorzugsweise erste Oberflächenbereiche auf, die vorteilhaft gegenüberliegend zu den ersten Oberflächenbereichen des ersten Festkörpers angeordnet sind.

Eine derartige erfindungsgemäße Vorrichtung kann dann einen ersten Einlass aufweisen. Dieser Einlass umfasst dann vorteilhaft einen in die Reaktionskammer mündenden Einlasskanal, eine Einlasskammer und/oder eine Einlassöffnung in dem Deckel oder im Festkörper. Der Einlass kann auch unmittelbar in einen ersten Oberflächenbereich münden.

Analog dazu kann auch ein Auslass bei einer erfindungsgemäßen Vorrichtung vorgesehen sein. Dieser Auslass kann dabei einen in der Reaktionskammer beginnenden Auslasskanal umfassen, an welchen sich vorteilhaft eine Auslasskammer anschließt. Diese Auslasskammer kann dann über eine Auslassöffnung im Deckel oder im Festkörper mit der Umgebung verbunden sein.

Der Einlass und der Auslass einer erfindungsgemäßen Vorrichtung dienen zum Einen dem Einfüllen und dem Entnehmen einer Probenflüssigkeit. Zum Anderen dienen der Einlass und der Auslass auch der Be- und Entlüftung während der Transportvorgänge in einer erfindungsgemäßen Vorrichtung und insbesondere in der Reaktionskammer einer derselben.

Bei einer erfindungsgemäßen Vorrichtung können ferner ein oder mehrere zweite Einlässe vorgesehen sein. Diese zweiten Einlässe sind analog zu den ersten Einlässen vorteilhaft mit Einlasskanälen, Einlasskammern und/oder Einlassöffnungen im Deckel oder im Festkörper ausgestattet. Die Einlasskanäle sind dann mit je einem ersten Oberflächenbereich verbunden. Denkbar ist jedoch auch, dass die Einlasskanäle der zweiten Einlässe mit einem zweiten Oberflächenbereich verbunden sind.

In einem erfindungsgemäßen Verfahren kann nach der Herstellung der ersten Oberflächenbereiche in dem Festkörper eine Reagenzien enthaltende Flüssigkeit auf die ersten Oberflächenbereiche gegeben werden. Auf verschiedene erste Oberflächenbereiche können dabei verschiedene Flüssigkeiten gegeben werden. Diese Flüssigkeiten können dann mit einer weiteren Flüssigkeit, nämlich einer Probe, vermischt werden, wobei die Probe mit den Reagenzien reagiert. Es ist ebenso möglich, dass die Reagenzien auf den ersten Oberflächen vorübergehend angelagert z.B. eingetrocknet werden. Die Reagenzien sind dann als Feststoff auf den Oberflächen gelagert. Durch die Aufgabe einer Probe können diese eingetrockneten Reagenzien dann gelöst werden. Die Probe reagiert dann mit den gelösten Reagenzien im Bereich der ersten Oberflächenbereiche, an eine separaten Reaktionskammer der Vorrichtung oder nach der Entnahme aus der Vorrichtung außerhalb der Vorrichtung. Ferner ist es möglich, dass die eingetrockneten Reagenzien mit einem Lösungsmittel gelöst werden, um anschließend im Bereich der ersten Oberflächenbereiche oder in einem anderen Bereich einer erfindungsgemäßen Vorrichtung mit einer Probenflüssigkeit vermischt werden, um die gewünschten Reaktionen einzuleiten.

Ebenso ist es möglich, dass die Reagenzien dauerhaft in den ersten Oberflächenbereichen angelagert, das heißt immobilisiert werden.
Das Anlagern der Reagenzien kann über eine kovalente Bindung erfolgen. Zur Analyse kann dann die Probe auf die ersten Oberflächenbereiche gegeben werden. Sollte dann die zu analysierende Substanz in der Probe vorhanden sein, bindet diese an den entsprechenden ersten Oberflächenbereichen an. Eine solche Bindungsreaktion kann dann über eine entsprechende Indikatorreaktion nachgewiesen werden.

Die mikro- oder nanostrukturierten Oberflächen der ersten Oberflächenbereiche können in einer Vertiefung des Festkörpers geformt werden. Wird diese Vertiefung mit einem Deckel verschlossen, bildet die Vertiefung eine Reaktionskammer. Zu dieser Reaktionskammer wird vorteilhaft ein erster Einlass vorgesehen. Ferner kann auch ein zweiter Einlass vorgesehen sein, der Einfüllen einer Flüssigkeit mit Reagenzien in die Vorrichtung verschlossen wird. Das Verschließen des zweiten Einlasses hat den Vorteil, dass dadurch die Menge der Flüssigkeit mit den Reagenzien genau dosiert in die Vorrichtung bzw. in die Reaktionskammer gegeben werden kann, um sie anschließend von der Umgebung zu isolieren.

Ausführungsbeispiele für erfindungsgemäße Vorrichtungen sind anhand der Zeichnung näher beschreiben. Darin zeigt
- Fig. 1: eine Draufsicht einer erste erfindungsgemäße Vorrichtung,
- Fig. 2: einen Schnitt gemäß der Linie II-II in Fig. 1,
- Fig. 3: eine Draufsicht auf einen Träger einer zweiten erfindungsgemäßen Vorrichtung,
- Fig. 4: einen Schnitt durch die zweite erfindungsgemäße Vorrichtung entsprechend der Linie IV-IV in Fig. 3,
- Fig. 5: eine Draufsicht auf den Träger einer dritten erfindungsgemäßen Vorrichtung,
- Fig. 6: einen Schnitt durch die zweite erfindungsgemäße Vorrichtung entsprechend der Linie VI-VI in Fig. 5,
- Fig. 7: einen Schnitt durch die dritte erfindungsgemäße Vorrichtung gemäß der Linie VII-VII in Fig. 5 und
- Fig. 8: einen Schnitt durch die dritte erfindungsgemäße Vorrichtung gemäß der Linie VIII-VIII in Fig. 5.

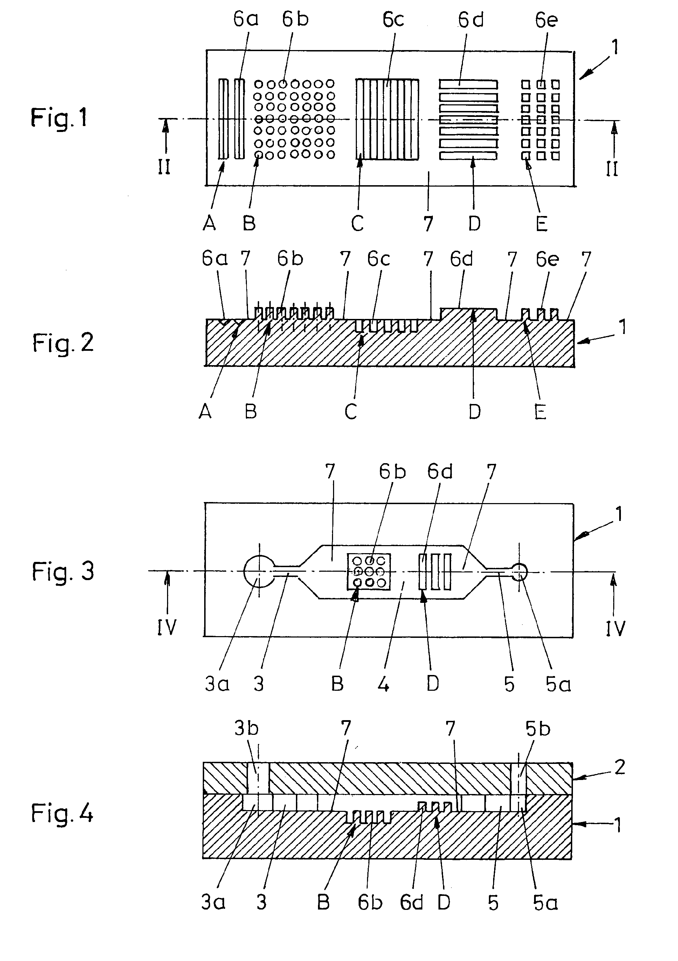

Die in den Figuren 1 und 2 dargestellte erfindungsgemäße Vorrichtung besteht aus einem als Träger 1 bezeichneten Festkörper in Quaderform. Auf der Oberseite des Trägers 1 sind erste Oberflächenbereiche 6a bis 6e und zweite Oberflächenbereiche 7 vorgesehen. Die ersten Oberflächenbereiche 6a bis 6e sind beabstandet voneinander angeordnet und jeder dieser ersten Oberflächenbereiche 6a bis 6e hat eine in der Draufsicht rechteckige Form. Diese ersten Oberflächenbereiche 6a bis 6e des Trägers 1 haben eine mikrostrukturierte Oberfläche. Die zweiten Oberflächenbereiche 7, welche die ersten Oberflächenbereiche einschließen, sind dagegen eben ausgebildet. Durch die mikrostrukturierte Oberfläche in den ersten Oberflächenbereichen 6a bis 6e wirken in den Bereichen der ersten Oberflächenbereiche 6a bis 6e größere Kapillarkräfte als in den zweiten Oberflächenbereichen 7.

Bei den ersten Oberflächenbereichen 6a bis 6e sind die Oberflächen auf unterschiedliche Art und Weise mikrostrukturiert. Es sind aber ebenso Vorrichtungen für bestimmte Verendungen sinnvoll, bei denen die Oberflächen auf gleiche Art und Weise mikrostrukturiert sind. Allen ersten Oberflächenbereichen 6a bis 6e ist gemeinsam, dass die mikrostrukturierten Oberflächen der ersten Oberflächenbereiche 6a bis 6e regelmäßig angeordnete Strukturelemente A bis E aufweisen. Die ersten Oberflächenbereiche 6a bis 6e des Trägers 1 unterscheiden sich dabei in der Form der ausgewählten Strukturelemente. Durch die verschiedenen Strukturelemente wirken in den ersten Oberflächenbereichen 6a bis 6e voneinander verschiedene Kapillarkräfte, welche ein bestimmenden Einfluss auf die Speicherfähigkeit von Flüssigkeiten der jeweiligen mikrostrukturierten Oberfläche haben.

Den Strukturelementen der ersten Oberflächenbereiche 6a bis 6e ist gemeinsam, dass die vorteilhaft ausschließlich durch mechanische Bearbeitung des Trägers 1 hergestellt werden, wobei der Träger 1 aus einem Material besteht und die Strukturelemente nicht durch Beschichtungen oder ähnliches auf dem Träger 1 aufgetragen werden.

Bei dem Träger 1 gemäß der Figuren 1 und 2 sind folgende Strukturelemente A bis E in den ersten Oberflächenbereichen 6a bis 6e vorgesehen. Der erste Strukturbereich 6a weist als Strukturelemente kerbenartige Nuten A auf. Diese sind parallel zueinander in Querrichtung des Trägers 1 angeordnet.

Beabstandet von dem ersten Oberflächenbereich 6a und durch einen zweiten Oberflächenbereich 7 getrennt, ist der erste Oberflächenbereich 6b angeordnet. Dieser erste Oberflächenbereich 6b weist als Strukturelemente rasterförmig angeordnete Säulen B auf. Diese Säulen B haben einen kreisförmigen Querschnitt.

Beabstandet von diesem ersten Oberflächenbereich 6b und durch einen zweiten Oberflächenbereich 7 getrennt ist der erste Oberflächenbereich 6c angeordnet. Als Strukturelemente sind hier wiederum Nuten C vorgesehen, welche ebenfalls in Querrichtung des Trägers 1 angeordnet sind, jedoch einen rechteckigen Querschnitt aufweisen.

Getrennt durch einen zweiten Oberflächenbereich 7 und beabstandet von dem ersten Oberflächenbereich 6c ist der erste Oberflächenbereich 6d angeordnet. Dieser erste Oberflächenbereich 6d weist in Längsrichtung des Trägers 1 liegende Stege D als Strukturelemente auf.

Durch einen weiteren zweiten Oberflächenbereich getrennt ist der letzte erste Oberflächenbereich 6e des Trägers 1 angeordnet. Dieser erste Oberflächenbereich 6e weist als Strukturelemente Säulen E auf, welche jedoch im Unterschied zu den Säulen A des ersten Oberflächenbereiches 6b einen quadratischen Querschnitt haben.

Im Weiteren wird auf die Figuren 3 und 4 Bezug genommen, welche eine zweite erfindungsgemäße Vorrichtung zeigen. Die zweite erfindungsgemäße Vorrichtung weist einen als Träger 1 bezeichneten Festkörper und einen Deckel 2 auf, wobei in Fig. 3 wegen der besseren Klarheit, nur der Träger 1 in der Draufsicht dargestellt ist. Der Träger 1 weist auf seiner Oberseite mehrere miteinander verbundene Ausnehmungen auf, welche von dem Deckel 2 zumindest teilweise verschlossen sind. Dadurch bilden die Ausnehmung in der Oberseite des Trägers 1 Hohlräume oder Kanäle zwischen dem Träger 1 und dem Deckel 2 aus. Einer der Hohlräume in der zweiten erfindungsgemäßen Vorrichtung bildet dabei eine Reaktionskammer 4.

Die Reaktionskammer 4 ist über einen Einlass 3, 3a, 3b und einem Auslass 5, 5a, 5b mit der Umgebung verbunden. Der Einlass umfasst dabei eine Einlassöffnung 3b in dem Deckel 2, welcher mit einer Einlasskammer 3a verbunden ist, welche durch einen Ausnehmung in der Oberseite des Trägers 1 gebildet wird. Diese Einlasskammer 3a ist über einen Einlasskanal 3 mit der Reaktionskammer 4 verbunden. Die Reaktionskammer 4 ist dann über einen Auslasskanal 5 mit einer Auslasskammer 5a verbunden. Von dieser Auslasskammer 5a besteht über eine Auslassöffnung 5b in dem Deckel 2 eine Verbindung zur Umgebung.

Der Einlasskanal 3, die Reaktionskammer 4 und der Auslasskanal 5 sind dabei so ausgebildet, dass eine in den Einlass 3, 3a, 3b gegebene Flüssigkeit aufgrund der Wirkung von Kapillarkräften oder anderen Transportkräften wie z.B. Druck aus dem Einlass 3, 3a, 3b in die Reaktionskammer 4 und von dort aus weiter in Richtung Auslass 5, 5a, 5b transportiert werden kann. Die bei einem solchen Transportvorgang einer Flüssigkeit durch bzw. in der zweiten erfindungsgemäßen Vorrichtung notwendige Be- und Entlüftung der Reaktionskammer 4 erfolgt dabei über die Einlassöffnung 3b bzw. die Auslassöffnung 5b im Deckel 2.

Der Boden der Reaktionskammer 4 wird durch einen Abschnitt der Oberfläche des Trägers 1 gebildet. Dieser Abschnitt besteht aus zusammenhängenden ersten Oberflächenbereichen 6b, 6d und diese umgebende zweite Oberflächenbereiche 7. Die ersten Oberflächenbereiche 6b, 6d weisen eine mikrostrukturierte Oberfläche auf, welche durch regelmäßig angeordnete Strukturelemente B, D gebildet werden. In diesen mikrostrukturierten Oberflächen 6b, 6d wirken größere Kapillarkräfte als in den sie umgebenden zweiten Oberflächenbereichen 7. Dadurch sind die ersten Oberflächenbereiche 6b, 6d insbesondere für Wasser oder wässrige Lösungen leichter benetzbar (hydrophil).

Der erste Oberflächenbereich 6b ist gegenüber den umgebenden zweiten Oberflächenbereichen 7 abgesenkt. Dieses hat den Vorteil, dass eine in dem ersten Oberflächenbereich 6b angesammelte Flüssigkeit zunächst Kapillarkräfte überwinden muss, welche ein Übertreten der Flüssigkeit von dem ersten Oberflächenbereich 6b an den Rändern des ersten Oberflächenbereiches b behindern. Die Ränder des abgesenkten ersten Oberflächenbereiches 6b bilden somit eine Art Kapillarstopp, welcher einen Flüssigkeitstransport über die Ränder des ersten Oberflächenbereiches 6b hinweg behindert.

Als Strukturelemente sind in dem Oberflächenbereich 6d der zweiten erfindungsgemäßen Vorrichtung Stege D vorgesehen, die parallel zueinander angeordnet sind.

Die ersten Oberflächenbereiche 6b, 6d der zweiten erfindungsgemäßen Vorrichtung sind im Übrigen mit Reagenzien (vorteilhaft handelt es sich dabei um verschiedene Reagenzien) behandelt. Das bedeutet, dass vor dem Aufsetzen des Deckels 2 auf den Träger 1 z.B. mit einem Dispenser Reagenzien auf die ersten Oberflächenbereiche 6b, 6d aufgetragen werden. Daraufhin lässt man die Reagenzien in den ersten Oberflächenbereichen 6b, 6d eintrocknen und verschließt anschließend die Reaktionskammer 4 durch das Aufsetzen des Deckels 2 auf den Träger 1. Über den Einlass 3, 3a, 3b kann nun eine Probenflüssigkeit in die zweite erfindungsgemäße Vorrichtung gegeben werden, welche sich aufgrund der Kapillarkräfte oder anderer Transportkraft z.B. Druck in die Reaktionskammer 4 zieht und dort die ersten Oberflächenbereiche 6b, 6d benetzt.

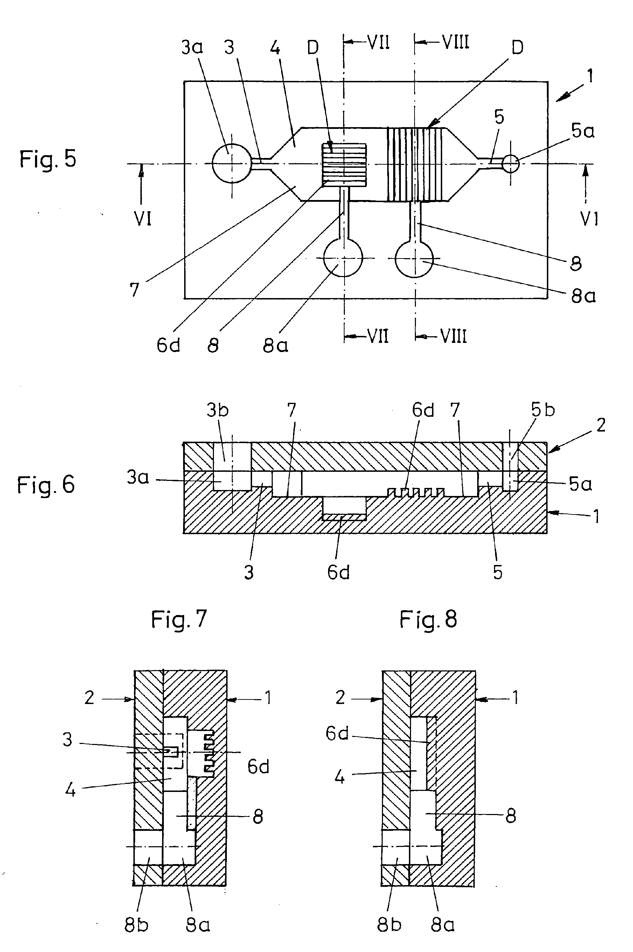

Der Deckel 2 wird in der Regel durch Schweißen oder ähnliches an dem Träger 1 befestigt. Hierbei kann es insbesondere beim Schweißen vorkommen, dass hitzeempfindliche Reagenzien, welche in den ersten Oberflächenbereichen 6b, 6d gelagert werden, beschädigt werden. Eine Lösung für dieses Problem bietet jedoch die dritte erfindungsgemäße Vorrichtung, wie sie anhand der Figuren 5 bis 8 beschrieben wird, auf welche im weiteren Bezug genommen wird.

Die in den Figuren 5 bis 8 dargestellte dritte erfindungsgemäße Vorrichtung weist wie die Vorrichtung gemäß der Figuren 3 und 4 einen Träger 1 und einen Deckel 2 auf, welcher einen Reaktionsraum 4 nach oben hin begrenzt. Ferner weist die dritte erfindungsgemäße Vorrichtung einen Einlass 3, 3a, 3b und einen Auslass 5, 5a, 5b wie die zweite erfindungsgemäße Vorrichtung gemäß der Figuren 3 und 4 auf. Der Reaktionskammer 4 wird durch einen zusammenhängenden Abschnitt von ersten Oberflächenbereichen 6b und zweiten Oberflächenbereichen 7 gebildet. Die ersten Oberflächenbereiche 6b sind dabei beabstandet voneinander und getrennt durch zweite Oberflächenbereiche 7 angeordnet. Bei dem in der Darstellung der Fig. 5 und 6 linken ersten Oberflächenbereich 6b handelt es sich um einen Oberflächenbereich, der gegenüber der umgebenden Oberfläche der zweiten Oberflächenbereiches 7 abgesenkt ist. Dagegen ist der in der Darstellung rechte erste Oberflächenbereich 6b gegenüber den umgebenden zweiten Oberflächenbereichen 7 erhaben. Als Strukturelemente weisen beide ersten Oberflächenbereiche Stege D auf. Die Stege D des linken ersten Oberflächenbereiches 6d sind dabei in Längsrichtung der Reaktionskammer 4 parallel zueinander angeordnet, während die Stege D des in der Darstellung rechten ersten Oberflächenbereichs in Querrichtung der Reaktionskammer 4 parallel zueinander angeordnet sind.

Der in der Darstellung linke erste Oberflächenbereich 6d ist von den Seitenwänden der Reaktionskammer 4 beabstandet, während der in der Darstellung rechte erste Oberflächenbereich 6d mit seinen Strukturelementen D an die sich in Längsrichtung erstreckenden Seitenwänden der Reaktionskammer 4 anstößt.

Sowohl der linke erste Oberflächenbereich als auch der rechte erste Oberflächenbereich sind über zweite Einlässe 8, 8a, 8b für Reagenzien mit der Umgebung der dritten erfindungsgemäßen Vorrichtung verbunden. Diese zweiten Einlässe weisen einen Einlasskanal 8 auf, welcher in den ersten Oberflächenbereichen 6d mündet. Dieser Einlasskanal 8 ist mit einer Einlasskammer 8a verbunden, an welche sich eine durch den Deckel 2 führende Einlassöffnung 8b anschließt.

Der Vorteil einer derartigen dritten erfindungsgemäßen Vorrichtung ist, dass nach dem Aufsetzen des Deckels 2 auf den Träger 1 über die Einlassöffnungen 8a der zweiten Einlässe 8, 8a, 8b Reagenzien in die dritte erfindungsgemäße Vorrichtung gegeben werden können. Diese werden z.B. aufgrund der wirkenden Kapillarkräfte zu den ersten Oberflächenbereichen 6b transportiert wo sie sich gleichmäßig verteilen und vorteilhaft dort eintrocknen. Zu einem späteren Zeitpunkt kann dann eine Probenflüssigkeit in die Einlassöffnung 3b gegeben werden, welche sich aufgrund der wirkenden Kapillarkräfte über den Einlasskanal 3 in der Reaktionskammer 4 verteilt.

Im Weiteren werden erfindungsgemäße Vorrichtungen und deren erfindungsgemäße Verwendungen beispielhaft beschrieben:

### Beispiel 1:

Eine bevorzugte Ausführungsform der Erfindung betrifft eine mikrostrukturierte Vorrichtung (Mikrochip) mit der eine Flüssigkeit untersucht werden kann. Der Mikrochip enthält einen Einfüllbereich und einen Untersuchungsbereich mit mindestens einem mikrostrukturierten und innerhalb des Untersuchungsbereiches angeordnetetn ersten Oberflächenbereich, der von einem zweiten Oberflächenbereich umschlossen ist. Der erste Oberflächenbereich umfasst im wesentlichen regelmäßig angeordnete Säulen, Stege oder Vertiefungen und erlaubt das Lagern von zumeist als Nachweisreagenzien verwendeter Trockenchemikalien (z. B. als Indikatoren) durch Aufbringen (Spotten) von in einer Flüssigkeit mit dem gelösten Reagenz (Chemikalie, Enzym, Antikörper, Nukleinsäure, mit Chemikalien beschichtete Partikel o. ä. ) und deren anschließendes Eintrocknen.

In einer bevorzugten Ausführungsform des Mikrochips ist die Oberfläche der ersten Oberflächenbereiche durchgehend hydrophil. Beim Aufbringen eines Flüssigkeitstropfen bzw. einer definierten Flüssigkeitsmenge mittels Dispenser oder Pipette auf eine nicht strukturierten Teil der Chipoberfläche, z. B. der zweiten Oberfläche verliefe der Flüssigkeitstropfen unregelmäßig und unkontrolliert und das Reagenz wurde ungleichmäßig auf der Oberfläche eintrocknen bzw. immobilisiert oder absorbiert. Dies hätte zur Folge, dass der anschließende Test weniger präzise wäre.

In der vorliegenden erfindungsgemäßen Ausführungsform verbleibt der Flüssigkeitstropfen bzw., die Flüssigkeitsmenge mit dem darin gelösten Reagenz jedoch nach dem Auftragen mittels eines Dispenser oder einer Pipette in den Grenzen des strukturierten ersten Oberflächenbereichs, was zur Folge hat, das das Reagenz nur in dem durch die Oberflächenstrukturierung definierten geometrischen Bereich eintrocknet und gelagert ist. So lässt sich die Lage eines jeden solcher Spots genau vorhersagen, was das in der Arraytechnologie typischerweise verwendetes automatisiertes Auslesen der Spots mittels eines optischen Scanners vereinfacht.

Durch Aufbringen einer Vielzahl von Chemikalien auf einer Vielzahl solcher strukturierten Oberflächenbereiche kann so ein so genannter Array-Testchip geschaffen werden. Hierzu wird im Anschluss des Spottens die strukturierte Seite des Mikrochips mit einem Deckel (Klebefolie, Kunststoffplatte, Glasplatte, etc.) bis auf einen Einlass und einen Auslass verschlossen.

Für die Analyse einer Probenflüssigkeit wird die Probe über den Einlass in die Untersuchungskammer geleitet, wo einzelne Probenbestandteile mit den verschiedenen Spots reagieren können.

Der Mikrochip ist geeignet für Anwendungen und Tests von Flüssigkeiten, die Biomoleküle enthalten, wie Nukleinsäuren und Proteine.

### Beispiel 2: Immobilisierung von Streptavidin

Zur Immobilisierung von Streptavidin werden die mikrostrukturierten ersten Oberflächenbereiche des Mikrochips gemäß dem Beispiel 1 mit Streptavidin beschichtet. Hierzu wird mittels eines Labordispensers (GeSiM) 0.1 µl eine Streptavidinlösung (1µg/ml in 0.1 M Phosphatpuffer, pH 7.0) auf die einzelnen mikrostrukturierten ersten Oberflächenbereiche aufgetragen und eingetrocknet. Anschließend wird das überschüssige, nicht gebundene Streptavidin durch Waschen mit 0.1 M Phosphatpuffer, pH 7.0 entfernt. Um die Menge des an der Oberfläche gebundene Streptavidins zu erhöhen, können die ersten Oberflächenbereiche vor dem Spotten durch beispielsweise Plasmaverfahren wie der Plasmapolymerisierung oder naßchemische Verfahren funktionalisiert werden.

Zur Analyse wird auf die gesamte Chipoberfläche die Probe Fluorescein-Biotin in unterschiedlichen Konzentrationen (1.0µM in PBS) aufgetragen und nach einer Inkubationszeit von 30 Sekunden durch einen Waschpuffer entfernt. Der Chip kann anschließend optisch unter dem Fluoreszenzmikroskop oder Fluoreszenz-Reader bei 485/525 nm (Virtek-Reader) vermessen werden, wobei die Fluoreszenzintensität mit der Konzentration an Fluorescein-Biotin korreliert.

### Beispiel 3: Herstellung eines Antikörper-Microarrays

Bei einem Antikörper-Microarray sind Antikörper in hohen Dichte auf die ersten Oberflächenbereiche der Kunststoffplatte (Festkörper) aufgetragen und immobilisiert. Die Kunststoffplatte wird nach dem immobilisieren der Antikörper mit einer zweiten Kunststoffplatte mit einer Kanalstruktur (Kanalplatte) verbunden, so dass über deren Kanalstruktur von außen Flüssigkeiten über die ersten Oberflächenbereiche geleitet werden können. Für Nachweis von Antigenen in Probenflüssigkeiten wird hierzu die Probe (z.B. Zell-Lysat) über einen Einlass und die Kanalstruktur in eine Reaktionskammer 4 und deren erste Oberflächenbereiche geleitet.

Nach einem definierten Zeitintervall wird die Probe durch auftragen einer Waschlösung aus der Reaktionskammer entfernt. Durch Zuführen einer geeigneten Indikatorlösung kann das gebundene Antigen nachgewiesen werden.

### Beispiel 4: Enzymatische Bestimmung von Infektionskrankheiten in Urinproben

Die einzelnen ersten Oberflächenbereiche (Spots) innerhalb einer Reaktionskammer enthalten Reagenzien zum enzymatischen Nachweis von Leukozyten, Nitrit, Albumin, okkultes Blut und Creatinin. Bei Vorhandensein der entsprechenden Analyten in der flüssigen Probe kommt es in den Testbereichen zu einem Farbumschlag, der wie bei einem Teststreifen mit dem bloßen Auge und Farbskala oder aber mit lichttechnischen Untersuchungen analysiert werden kann.

### Beispiel 5: Bestimmung von Choriongonadotropin (hCG) in Urin (Sandwich Immunoassay)

Eine definierte Menge der Urinprobe wird mit einer Pipette in den Einlass der Vorrichtung gebracht, von wo es über Kapillarwirkung in einen Zentralkanal strömt und dabei in einem Resuspensionsbereich einer Reaktionskammer mit einem in einem ersten Oberflächenbereich vorliegenden eingetrockneten, mit Farbstoff markierten Antikörper gegen hCG aufnimmt und in Lösung bringt. Ein in der Urinprobe vorhandenes hCG bindet sich an den in der Urinprobe gelösten hCG-Antikörpern.

Die mit hCG gebundenen Antikörper und ungebundene Antikörper fließen durch die Kapillarkraft weiter in den einen Testbereich der Reaktionskammer. In dem Testbereich sind ebenfalls erste Oberflächenbereiche vorgesehen. Diese ersten Oberflächenbereiche enthalten immobilisierte hCG-Antikörper der zweiten Sorte, die spezifisch für ein anderes Epitop des hCG-Hormones und nicht resuspendierbar sind. Sie binden ebenfalls an das gegebenenfalls vorhandene hCG, an das bereits die ersten Antikörper angebunden haben. Dadurch entsteht ein fixierter, sandwichartiger Molekül-Komplex.

Über einen Waschschritt werden die in der ersten Reaktionskammer vorliegenden ungebundenen Antikörper entfernt und die Bindung, bzw. der Nachweis von hCG, über Farbbildung nachgewiesen. Das Vorhandensein von hCG in der Probe kann beispielsweise qualitativ mit dem bloßen Auge über eine Anfärbung des Testbereiches nachgewiesen werden.

### Beispiel 6: Bestimmung von Glukose in Blutplasma

Nachfolgend wird eine chemiluminometrische Bestimmung von Glukose in Plasma beschrieben, wobei Glukose enzymatisch über eine Glukose-Oxidase katalytisch zu Glukonsäure umgesetzt wird. Das dabei u.a. entstehende Wasserstoffperoxid reagiert in Gegenwart einer Peroxidase in einer lichtproduzierenden Reaktion mit Luminol. Hierbei wird Luminol zu 3-Aminophthalat oxidiert, wobei Licht im blauen Wellenlängenbereich (425nm) emittiert wird. Die Intensität des emittierten Lichtes ist hierbei proportional zu der Glukosekonzentration und lässt sich über übliche lichtempfindliche Sensoren, wie Photomultiplyer oder Photdioden, messen.

Das Reagenz bzw. die Reagenzien liegen in eingetrockneter Form in ersten Oberflächenbereichen in einem Resuspensionsbereich der Vorrichtung vor. Hierzu werden die ersten Oberflächenbereiche der Vorrichtung entsprechend vorbehandelt. Üblicherweise wird über Dispensertechnik das komplexbildende Reagenz in flüssiger Form auf die Oberfläche des Resuspensionsbereichs aufgetragen und anschließend eingetrocknet. Hierzu können Pipettenstationen, bzw. Standard-Laborroboter (Bsp. Biomek der Firma Beckman Coulter) verwendet werden, die das Pipettieren kleinster Volumina im Mikroliterbereich erlauben. Die ersten Oberflächenbereiche sind so gestaltet, dass die aufgetragene Flüssigkeit ausschließlich die ersten Oberflächenbereiche benetzt und nicht auf einen umgebenden zweiten Oberflächenbereich, in die angrenzenden Kanäle oder Kavitäten fließt. Im vorliegenden Beispiel wurde als Reagenz 1 µl eines Gemisches aus Glukose-Oxidase (100U/µl), mikrobielle Peroxidase Arthromyces ramosus (200U/µl) und Luminol (10mM) in dem Resuspensionsbereich aufgetragen und eingetrocknet.

Nach einem Versiegeln bzw. Deckeln des strukturierten ersten Oberflächenbereich umfassenden Resuspensionsbereich mit beispielsweise einer Klebefolie ist die Vorrichtung funktionsfähig und kann mit der entsprechenden Probe befüllt werden. Auch ist es möglich das Reagenz bereits als Feststoff, z.B. Lyophilisat, Pulver, Pellet, Tablette, Kunststoffpartikel (Beads), etc. in die dafür vorgesehenen Kavitäten auf dem Chip vorzulegen.

Als Probe wurde 2µl K₂EDTA-Blut oder Blutplasma mit einer Pipette in einen Einlass der Vorrichtung gegeben, von wo aus die Blutprobe über Kapillarkräfte in einen Transportkanal, durch den Resuspensionsbereich und von dort in einen Inkubationsabschnitt transportiert wird. Während die Probe den Resuspensionsbereich durchströmt wird die Trockenchemikalie angelöst und mit der Probe vermischt. Der Inkubationsabschnitt dient dazu, eine zeitlich vordefinierte Reaktionszeit zwischen Chemikalie und Probe einzustellen. Als Reaktionszeit wird das Zeitintervall bezeichnet, welches die Probe braucht, um den Inkubationsbereich vollständig zu durchströmen. Die Reaktionszeit lässt sich über den Kapillarquerschnitt des Inkubationsbereichs und dessen Oberflächeneigenschaften präzise einstellen. Die so vorbehandelte Probe fließt schließlich in einen Sammelkanal, wo das entstehende Lichtsignal durch den außen auf den transparenten Deckel aufliegenden Photomultiplyer gemessen wird.

## Patentansprüche

1. Vorrichtung zum Handhaben von begrenzten Flüssigkeitsmengen mit folgenden Merkmalen:
- die Vorrichtung umfasst zumindest einen Festkörper (1);
- der Festkörper (1) weist Oberflächenbereiche (6, 7) auf, in welchen unterschiedliche Kapillarkräfte wirken;
- eine oder mehrere erste Oberflächenbereiche (6a bis 6e) haben eine mikrostrukturierte und/oder nanostrukturierte Oberfläche;
- die mikrostrukturierten und/oder nanostrukturierten Oberflächen weisen regelmäßig angeordnete Strukturelemente (A bis E) auf;
- der Festkörper und die Strukturelemente bestehen aus einem Material und sind einstückig miteinander verbunden
- einer oder mehrere erste Oberflächenbereiche (6a bis 6e) sind mit Reagenzien versehen
- ein zweiter Oberflächenbereich (7) umschließt zumindest einen der ersten Oberflächenbereiche.

2. Vorrichtung nach Anspruch 1, **dadurch gekennzeichnet, dass** zumindest ein zweiter Oberflächenbereich (7) eben ausgebildet ist.

3. Vorrichtung nach Anspruch 2, **dadurch gekennzeichnet, dass** in den ersten Oberflächenbereiche (6a bis 6e) jeweils unterschiedliche Kapillarkräfte wirken, insbesondere als in den zweiten Oberflächenbereichen.

4. Vorrichtung nach einem der Ansprüche 1 bis 3, **dadurch gekennzeichnet, dass** die Strukturelemente Säulen und/oder Stelen (B, E) umfassen.

5. Vorrichtung nach Anspruch 4, **dadurch gekennzeichnet, dass** die Säulen bzw. Stelen (B, E) einen Durchmesser von 0,1 bis 500 µm haben.

6. Vorrichtung nach Anspruch 4 oder 5, **dadurch gekennzeichnet, dass** die Säulen (B, E) bzw. Stelen einen Abstand von 0,1 bis 500 µm voneinander haben.

7. Vorrichtung nach einem der Ansprüche 4 bis 6, **dadurch gekennzeichnet, dass** die Säulen bzw. Stelen (B, E) einen Durchmesser von 01, bis 500 µm haben.

8. Vorrichtung nach einem der Ansprüche 4 bis 7, **dadurch gekennzeichnet, dass** die Säulen bzw. Stelen (B, E) einen quadratischen, runden, dreieckigen oder sechseckigen Querschnitt aufweisen.

9. Vorrichtung nach einem der Ansprüche 1 bis 8, **dadurch gekennzeichnet, dass** die Strukturelemente Nuten (A, C) umfassen.

10. Vorrichtung nach Anspruch 9, **dadurch gekennzeichnet, dass** die Nuten (A, C) eine Breite von 0,1 bis 500 µm haben.

11. Vorrichtung nach Anspruch 9 oder 10, **dadurch gekennzeichnet, dass** die Nuten (A, C) einen Abstand von 0,1 bis 500 µm voneinander haben.

12. Vorrichtung nach einem der Ansprüche 9 bis 11, **dadurch gekennzeichnet, dass** die Nuten eine Tiefe von 0,1 bis 500 µm haben.

13. Vorrichtung nach einem der Ansprüche 9 bis 12, **dadurch gekennzeichnet, dass** die Nuten (A) kerbenartig ausgebildet sind.

14. Vorrichtung nach einem der Ansprüche 9 bis 13, **dadurch gekennzeichnet, dass** die Nuten miteinander verbunden sind.

15. Vorrichtung nach einem der vorhergehenden Ansprüche, **dadurch gekennzeichnet, dass** die Nuten eine Kanalstruktur insbesondere eine Netzstruktur oder eine Mäanderstruktur bilden.

16. Vorrichtung nach einem der vorgenannten Ansprüche, **dadurch gekennzeichnet, dass** die Strukturelemente Stege (D) umfassen.

17. Vorrichtung nach Anspruch 16, **dadurch gekennzeichnet, dass** die Stege (D) eine Breite von 0,1 bis 500 µm und eine Höhe von 0,1 bis 500 µm haben.

18. Vorrichtung nach Anspruch 16 oder 17, **dadurch gekennzeichnet, dass** die Stege (D) einen Abstand von 0,1 bis 500 µm voneinander haben.

19. Vorrichtung nach einem der Ansprüche 1 bis 18, **dadurch gekennzeichnet, dass** einer oder mehrere erste Oberflächenbereiche gegenüber der umgebenden Oberfläche erhaben sind.

20. Vorrichtung nach einem der Ansprüche 1 bis 19, **dadurch gekennzeichnet, dass** einer oder mehrere erste Oberflächenbereiche gegenüber der umgebenden Oberfläche abgesenkt sind.

21. Vorrichtung nach einem der vorhergehenden Ansprüche, **dadurch gekennzeichnet, dass** die Ränder der abgesenkten ersten Oberflächenbereiche Strukturelemente bildende Kerben aufweisen.

22. Vorrichtung nach einem der Ansprüche 1 bis 21, **dadurch gekennzeichnet, dass** die ersten Oberflächenbereiche (6) in Form einer Matrix angeordnet sind, wobei die ersten Oberflächenbereiche vorzugsweise vollständig von dem zweiten Oberflächenbereich umschlossen sind.

23. Vorrichtung nach einem der vorhergehenden Ansprüche, **dadurch gekennzeichnet, dass** die Reagenzien Partikel enthalten, die zwischen zwei Strukturelementen bzw. in einem Strukturelement eingebettet sind.

24. Vorrichtung nach einem der vorhergehenden Ansprüche, **dadurch gekennzeichnet, dass** die ersten Oberflächenbereiche quadratisch rund/dreieckig oder sechseckig sind.

25. Vorrichtung nach einem der vorgenannten Ansprüche, **dadurch gekennzeichnet, dass** ein Abschnitt von zusammenhängenden (6a bis 6e) ersten und/oder zweiten Oberflächenbereichen (7) gegenüber der umgebenden Oberfläche abgesenkt sind.

26. Vorrichtung nach dem vorgenannten Anspruch, **dadurch gekennzeichnet, dass** der Abschnitt mit einem durch einen zweiten Festkörper gebildeten Deckel (2) verschlossen ist und dass der zwischen dem Abschnitt und dem Deckel (2) befindliche Raum eine Reaktionskammer (4) bildet.

27. Vorrichtung nach dem vorgenannten Anspruch, **dadurch gekennzeichnet, dass** die Vorrichtung einen ersten Einlass (3, 3a, 3b) aufweist.

28. Vorrichtung dach dem vorgenannten Anspruch, **dadurch gekennzeichnet, dass** der erste (3, 3a, 3b) Einlass einen in die Reaktionskammer (4) mündenden Einlasskanal (3) aufweist.

29. Vorrichtung nach Anspruch 27 oder 28, **dadurch gekennzeichnet, dass** der erste Einlass (3, 3a, 3b) eine Einlasskammer (3a) umfasst.

30. Vorrichtung nach einem der Ansprüche 27 bis 29, **dadurch gekennzeichnet, dass** der erste Einlass (3, 3a, 3b) eine Einlassöffnung (3b) im Deckel (2) oder im Festkörper (1) umfasst.

31. Vorrichtung nach einem der Ansprüche 26 bis 30, **dadurch gekennzeichnet, dass** die Vorrichtung einen Auslass (5, 5a, 5b) aufweist.

32. Vorrichtung nach dem vorgenannten Anspruch, **dadurch gekennzeichnet, dass** der Auslass (5, 5a, 5b) einen an der Reaktionskammer (4) beginnenden Auslasskanal (5) umfasst.

33. Vorrichtung nach Anspruch 31 oder 32, **dadurch gekennzeichnet, dass** der Auslass (5, 5a, 5b) eine Auslasskammer (5a) umfasst.

34. Vorrichtung nach einem der Ansprüche 31 bis 32, **dadurch gekennzeichnet, dass** der Auslass (5, 5a, 5b) eine Auslassöffnung (5b) im Deckel (2) oder im Festkörper (1) umfasst.

35. Vorrichtung nach einem der vorgenannten Ansprüche, **dadurch gekennzeichnet, dass** die Vorrichtung einen oder mehrere zweite Einlässe (8, 8a, 8b) aufweist.

36. Vorrichtung nach dem vorgenannten Anspruch, **dadurch gekennzeichnet, dass** die zweiten Einlässe (8, 8a, 8b) Einlasskanäle (8) umfassen, die mit einem ersten Oberflächenbereich (6b) verbunden sind.

37. Vorrichtung nach Anspruch 35 oder 36, **dadurch gekennzeichnet, dass** die zweiten Einlässe (8, 8a, 8b) Einlasskammern (8a) umfassen.

38. Vorrichtung nach einem der Ansprüche 35 bis 37, **dadurch gekennzeichnet, dass** die zweiten Einlässe (8, 8a, 8b) Einlassöffnungen (8b) im Deckel (2) oder im Festkörper (1) umfassen.

39. Verfahren zur Herstellung einer Vorrichtung nach einem der Ansprüche 1 bis 38, umfassen folgende Schritte:
- in der Oberfläche eines Festkörpers (1) werden durch Bearbeitung Oberflächenbereiche (6a bis 6e, 7) hergestellt, in welchen unterschiedliche Kapillarkräfte wirken;
- bei der Bearbeitung werden in ersten Oberflächenbereichen (6a bis 6e) mikro- und oder nanostrukturierte Oberflächen hergestellt, die durch regelmäßig angeordnete Strukturelemente (A bis E) gebildet werden
- wobei zumindest einer der ersten Oberflächenbereiche so angeordnet wird, dass er vollständig von einem zweiten Oberflächenbereich umschlossen ist.

40. Verfahren nach Anspruch 39, **dadurch gekennzeichnet, dass** auf die ersten Oberflächenbereiche (6a bis 6e) Reagenzien enthaltende Flüssigkeiten gegeben werden.

41. Verfahren nach dem vorhergehenden Anspruch, **dadurch gekennzeichnet, dass** die Reagenzien immobilisiert oder eingetrocknet werden.

42. Verfahren nach Anspruch 40 oder 41, **dadurch gekennzeichnet, dass** die mikro- und/oder nanostrukturierte Oberfläche in einer Vertiefung geformt wird.

43. Verfahren nach Anspruch 42, **dadurch gekennzeichnet, dass** die Vertiefung mit einem Deckel (2) verschlossen wird, wodurch die Vertiefung eine Reaktionskammer bildet.

44. Verfahren nach Anspruch 43, **dadurch gekennzeichnet, dass** in der Vorrichtung zumindest ein erster Einlass zur Reaktionskammer hergestellt wird.

45. Verfahren nach Anspruch 43 oder 44, **dadurch gekennzeichnet, dass** in der Vorrichtung zumindest ein zweiter Einlass zur Reaktionskammer hergestellt wird.

46. Verfahren nach Anspruch 45, **dadurch gekennzeichnet, dass** der zweite Einlass nach dem Einfüllen einer Flüssigkeit mit Reagenzien verschlossen wird.

47. Verwendung einer Vorrichtung nach einem der Ansprüche 1 bis 38, **dadurch gekennzeichnet, dass** auf die ersten Oberflächenbereiche (6a bis 6e) der Vorrichtung eine Probe gegeben wird.

48. Verwendung nach Anspruch 47, **dadurch gekennzeichnet, dass** die Probe mit auf den ersten Oberflächenbereichen immobilisierten oder eingetrockneten Reagenzien reagiert.

49. Verwendung nach Anspruch 47 oder 48, **dadurch gekennzeichnet, dass** die Probe den die eingetrockneten Reagenzien auflöst oder anlöst und die Probe mit den Reagenzien aus der Reaktionskammer transportiert werden.

50. Verwendung nach einem der Ansprüche 47 bis 49, **dadurch gekennzeichnet, dass** vor dem Aufgeben der Probe ein Lösungsmittel auf die ersten Oberflächenbereiche gegeben wird und vorzugsweise das Lösungsmittel die eingetrockneten Reagenzien anlöst oder auflöst und das Lösungsmittel mit den Reagenzien aus der Reaktionskammer transportiert werden.

51. Verwendung nach einem der Ansprüche 47 bis 49, **dadurch gekennzeichnet, dass** Teile der Probe mit den immobilisierten Reagenzien reagieren und sich an diesen anlagern.
